# EUROPEAN PATENT APPLICATION

(11) **EP 1 045 019 A2**
(43) Date of publication of application: **18.10.2000**
(21) Application number: 00830281.2
(22) Date of filing: 12.04.2000
(51) Int. Cl.: C10G 15/08

(54) **Cracking process and electronic apparatus therefor**

(30) Priority: 12.04.1999 IT VT990003
(71) Applicant: EC 2000 SONICAL S.R.L., 01017 Tuscania (VT) (IT)
(72) Inventor: Pandolfo, Mario, 01030 La Quercia (VT) (IT)
(74) Representative: Coppi, Cecilia

(57) **Abstract**

A cracking procedure is provided with an electronic apparatus including a set of coils coaxial to a stainless steel pipe through which the liquid or gas flows and, thanks to a precise resonance obtained within an absolutely exact time constant, is able to interfere at the molecular level, breaking down macromolecules into micromolecules. The resonances are repeated within a carefully defined range by the coils, in a constant manner relative to the cyclic fragmentation for the frequency portions, subject to variations due to the capacitance within each cycle, which varies as a function of the temperature, resistance, and the fluid mass flowing through the stainless steel pipe on which the coils are wound.

## Description

The present invention relates to a cracking procedure with an electronic apparatus which includes a set of coils coaxial to a stainless steel pipe through which the liquid or gas flows, in which an electro-physical apparatus which alters the micro-structure of the liquid or gas, breaks down the individual molecular chains to accomplish their fragmentation. The transformed molecules can then be used in traditional thermal or waterwork applications, in order to obtain a more rapid and complete combustion, or to avert heat reactions leading to calcite deposits and obstructions.

At the present time, with the current state of applied chemistry, cracking is understood to take place only in two cases: through catalysis and through the application of high temperatures to fluids under pressure.

From the hydrocarbon refining process, we know that the temperatures and pressures needed to obtain high-octane gasoline are of considerable magnitude.

For these reasons, the invention has the goal of establishing a cracking procedure of the type described at the beginning of this document which is able to interfere with the molecular energy structure at the resonance level, causing the cell itself to break down, emitting a part of its mass and charge, in the measure that the resonance is able to interfere with its structure for a time exactly proportional to the frequency and amplitude of the resonance.

The resulting atomic expansion due to the increased number of particles which occupy a well defined position in the liquid or gas, in a normal equilibrium condition, causes an increase in volume. In consequence, the derived interstitial number permits a more consistent orientation toward hydrogen and oxygen under distinct conditions, and in a measure directly proportional to the increased number of molecules obtained through the fragmentation.

The features of the invention and the advantages that it offers are detailed in the following description of a non-limiting example of its operation illustrated in the attached diagrams:

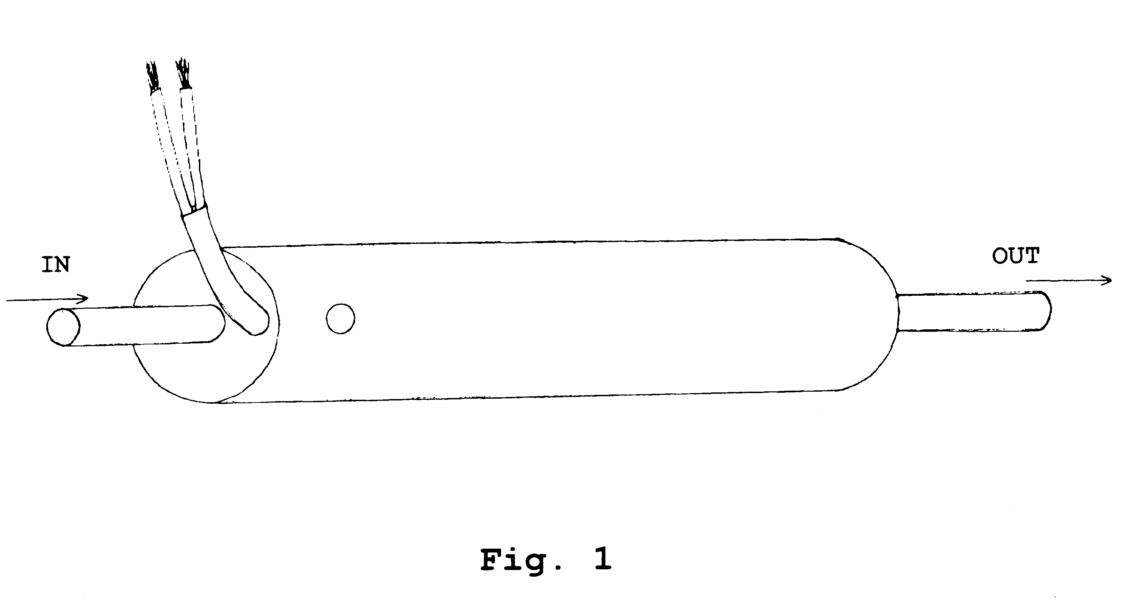

Figure 1 shows the drawing of the coil group enclosed in a fire-resistant, self-extinguishing PVC housing which does not emit toxic or harmful fumes.

Figure 2 shows the electrical diagram of the coil group.

Figure 3 shows a gas chromatogram of diesel fuel taken directly from the pump.

Figure 4 shows the cracking effect on the same type of diesel fuel.

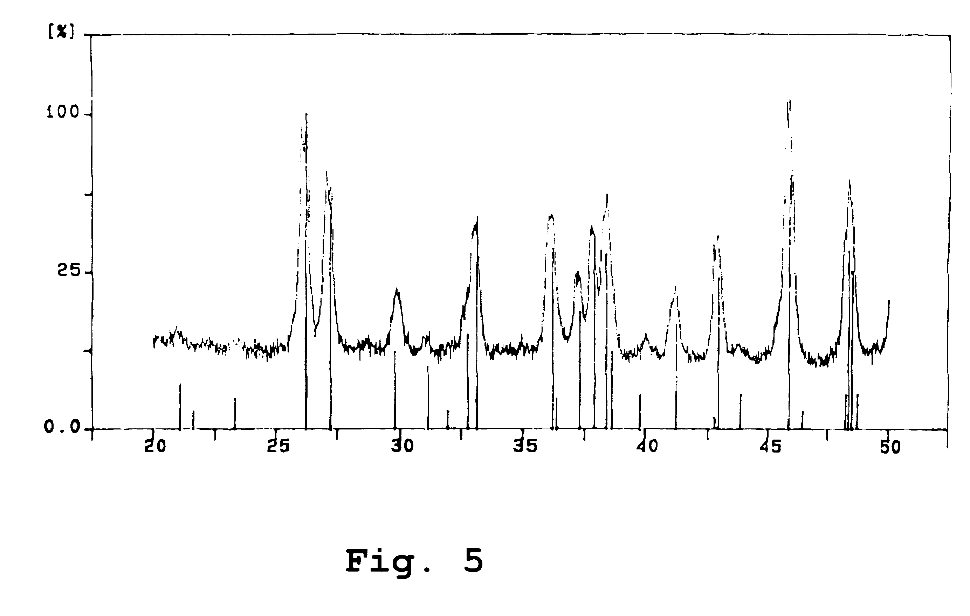

Figure 5 shows the diffractogram illustrating the effect on water.

The letter k indicates the AISI 316 stainless steel pipe and the top arrow indicates the direction of flow of the liquid or gas.

The letter c indicates a type B1060 ultra-fast diode.

The letter g indicates coil L1, wound in a clockwise direction on a Teflon support with an 8 mm bore with a 0.50 sq. mm tenvex wire, with 200 windings.

The letter h indicates the two coils wound in a counter-clockwise direction on a Teflon support with an 8 mm bore, coaxial with and below the two upper coils indicated with the letter p, which are likewise connected in series, with 100 windings of a 0.56 sq mm copper tenvex wire wound in a clockwise direction.

The letter y indicates coil L6, also wound on a Teflon support with an 8 mm bore and with 200 windings of a 0.50 sq. mm tenvex copper wire, wound in a counter-clockwise direction.

Thus, the letter g indicates coil L1, the letter h indicates coils L2 and L3, wound under coils L4 and L5 which are indicated by the letter p, while coil L6 is indicated with the letter y. The letters w and v indicate the two lines for the 12 volt, 230/1100 Hz power supply with sinusoidal, square or sawtooth waveform.

The start of coil L1 (g) is connected to the end of coil L3 (h).

The end of coil L1 (g) is connected to the start of coil L2 (h).

The end of coil L2 (h) is connected to the start of coil L3 (h).

The L1/L3 connection (g-h) is connected to the cathode of diode c.

The end L1 (g) - start L2 (h) connection is the power supply line v.

The start of coil L6 (y) is connected to the end of coil L4 (p).

The end of coil L6 (y) is connected to the start of coil L5 (p).

The end of coil L5 (p) is connected to the start of coil L4 (p).

The end L6 (y) - start L5 (p) connection is connected to the anode of diode c.

The start L6 (y) - end L4 (p) connection is the power supply line w.

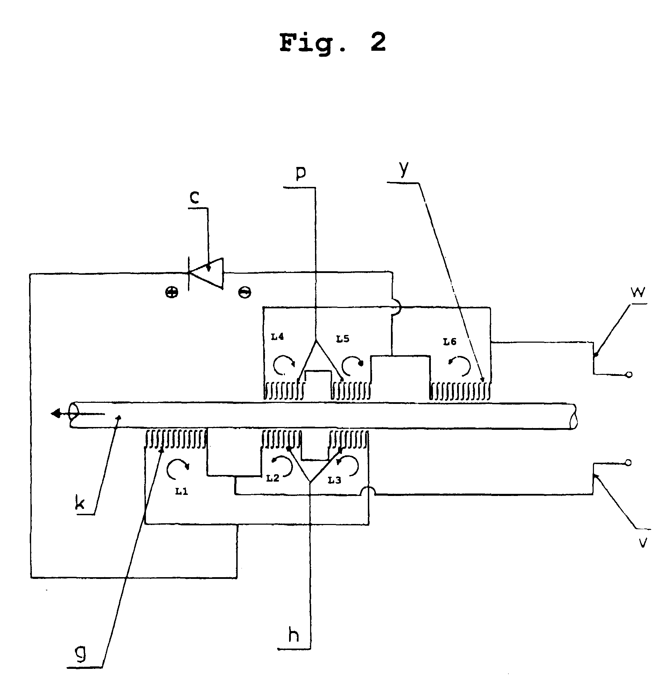

In Fig. 2, with this assembly and electrical circuitry there is clearly a combination of resonating inductive reactances which, due to the different numbers of windings, variations in flow, and the inevitable capacitance of various gaps necessarily filled with insulating materials, introduces new frequenciesdue to the continuous variations in capacitance, relative to the forced resonances and derived harmonics which inevitably ensue at each cyclic repetition, for fundamental beat frequencies which generate them.

The coil assembly which makes up the apparatus for the cracking of liquids or gases is powered by an electrical generator which can be a traditional 16-pole alternator, typically used in motor vehicles, with a running speed that supports frequencies from 230 Hz to 1100 Hz, with a sinusoidal waveform. However, it can also be supplied from the 220 or 110 volt electricity mains, through an 880 Hz fixed-frequency generator whose output waveform can be sinusoidal, square or sawtooth. This does not in any way alter the functioning of the present apparatus.

The power supply voltage is 12 volts, and the power consumption is approximately 8 watts at the higher frequencies.

The coils are wound on Teflon supports whose inner diameter ranges from a minimum of 8 mm to a maximum constrained only by the industrial application. However, the laboratory experiments confirm that this apparatus can be constructed on any scale, and for any industrial application.

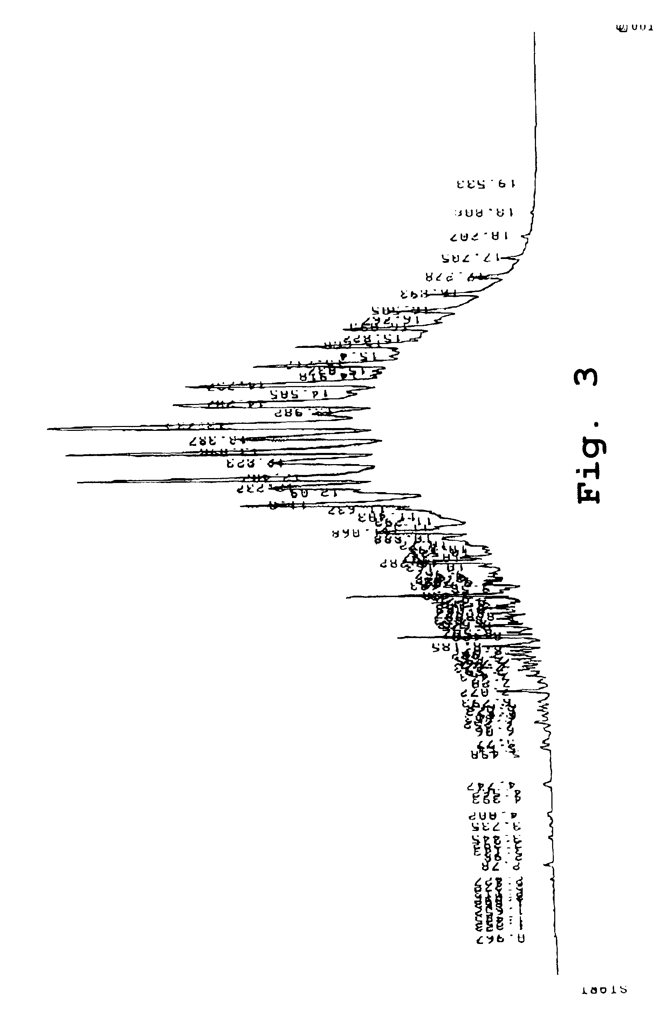

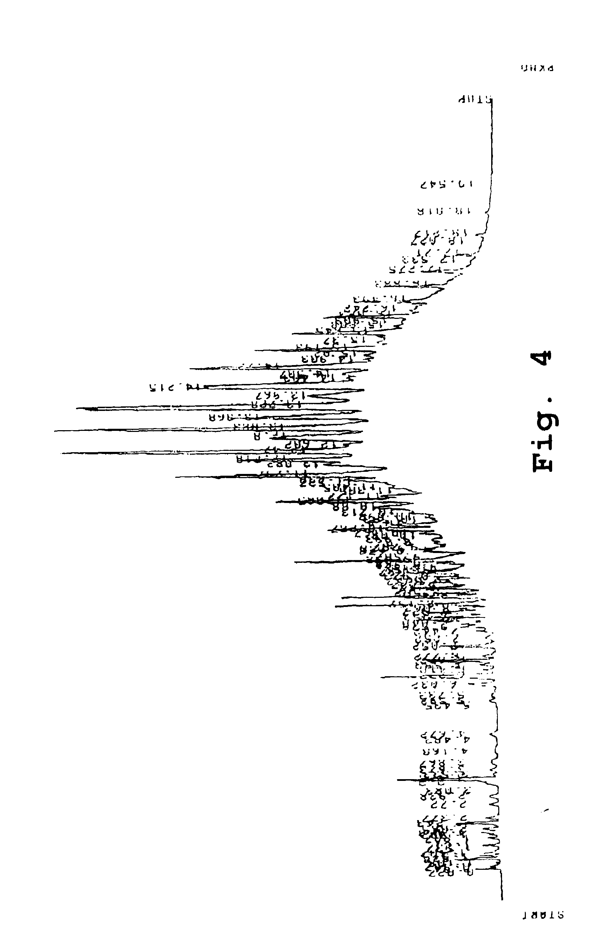

Figures 3 and 4 illustrate a normal diagram and a diagram on gases.

This system makes it possible to process liquids and gases so that, in the case of hydrocarbons, the transformation into smaller molecules causes an increase in volume which optimizes the flammability and combustion of the material, thus improving the efficiency of any thermal application thanks to a more favorable stoichiometric ratio, and hence considerably reducing the emissions associated with its combustion.

For other liquids, such as wafer, the resonance breaks down entire molecular aggregates, making it possible to destroy bacteria, even if not in suspension and highly resistant.

In consequence, the proliferation of pathogenic microorganisms, by effect of the resonance bond between hydrogen and oxygen, is inhibited; the resonance emitted by the coils also tends to almost completely prevent the transformation of bicarbonates in the miscible, and in this effect, which persists over time, at the molecular level prevents the ca(HC0₃)₂ --- Ca CO₃+H₂0+C0₂ equilibrium from shifting to the right even at high temperatures, thereby minimizing deposits of scale.

Clearly, in the case of constructions and dimensions different from those shown in the example and described in this patent application, although the frequencies and waveforms applied to supply the coil group remain the same, the voltage and power consumption will be different.

It is essential for the metal pipe on which the coils are wound to be constructed from AISI 316 stainless steel, by virtue of its austenic rhomboidal structure and its carbon content.

## Claims

1. An electronic apparatus for use with a cracking process to alter a microstructure of a liquid or gas, comprising:
a pipe (k) through which the liquid or gas is flowed; and
at least one coil (g,h,p,y) supplied with a voltage (v,w), said at least one coil (g,h,p,y) being positioned adjacent said pipe (k) and having an axial direction generally parallel to said pipe (k).

2. An electronic apparatus according to claim 1, wherein said at least one coil (g,h,p,y) includes a first coil (g, L1)) wound in a clockwise direction and at least one other coil (h; K2, L3) connected with said first coil (g, L1).

3. An electronic apparatus according to claim 2, wherein:
said first coil (g, L1) has first and second opposite ends, and
said at least one other coil (h; L2, L3) is wound in a counter-clockwise direction, and said at least one other coil (h; L2, L3) includes first and second opposite ends, with said first end of said at least one other coil (h; L2, L3) connected with said second end of said first coil (g, L1) and supplied with a first voltage, and said second end of said at least one other coil (h; L2, L3) connected with said first end of said first coil (g, L1).

4. An electronic apparatus according to claim 3, wherein said at least one other coil (h; L2, L3) includes:
a second coil (L2) wound in a counter-clockwise direction, said second coil (L2) having a first end as said first end of said at least one other coil (h) connected with said second end of said first coil (g, L1) and supplied with said first voltage, and a second opposite end, and
a third coil (L3) wound in a counter-clockwise direction, said third coil (L3) having a first end connected with said second end of said second coil (L2), and a second opposite end as said second end of said at least one other coil (h) connected with said first end of said first coil (g, L1).

5. An electronic apparatus according to claim 3, wherein said at least one coil further includes:
at least one further coil (p; L4, L5) wound in a clockwise direction, and
a last coil (y, L6) wound in a counter-clockwise direction and connected with said at least one further coil (p; L4, L5).

6. An electronic apparatus according to claim 5, wherein:
said last coil (y, L6) has first and second opposite ends,
said at least one further coil (p; L4, L5) includes first and second opposite ends, with said second end of said at least one further coil (p; L4, L5) connected with said first end of said last coil (y, L6) and supplied with a second voltage (w), and said first end of said at least one further coil (p; L4, L5) connected with said second end of said last coil (y, L6).

7. An electronic apparatus according to claim 6, wherein:
said at least one other coil (h; L2, L3) includes:
a second coil (L2) wound in a counter-clockwise direction, said second coil (L2) having a first end as said first end of said at least one other coil (h) connected with said second end of said first coil (g, L1) and supplied with said first voltage, and a second opposite end, and
a third coil (L3) wound in a counter-clockwise direction, said third coil (L3) having a first end connected with said second end of said second coil (L2), and a second opposite end as said second end of said at least one other coil (h) connected with said first end of said first coil (g, L1).
said at least one further coil (p; L4, L5) includes:
a fourth coil (L4) wound in a clockwise direction, said fourth coil having a second end as said second end of said at least one further coil (p) connected with said first end of said last coil (y, L6) and supplied with said second voltage (w), and a second opposite end, and
a fifth coil (L5) wound in a clockwise direction, said fifth coil having a first end connected with said second end of said last coil (y, L6), and a second opposite end connected with said first end of said fourth coil (L4).

8. An electronic apparatus according to claim 7, wherein said connection between said first end of said fifth coil (L5) and said second end of said last coil (L6) is connected with said connection between said first end of said first coil (L1) and said second end of said third coil (L3).

9. An electronic apparatus according to claim 8, wherein said connection between said first end of said fifth coil (L5) and said second end of said last coil (L6) is connected with said connection between said first end of said first coil (L1) and said second end of said third coil (L3) through a diode.

10. An electronic apparatus according to claim 7, wherein each of said coils (L1-L6) is wound on a support and includes a plurality of windings.

11. An electronic apparatus according to claim 10, wherein said support is made from Teflon, said first (L1) and last (L6) coils each include 200 windings and said second through fifth (L2-L5) coils each include 100 windings.
